(19) Europäisches Patentamt
European Patent Office
Office européen des brevets

(11) **EP 2 902 810 A1**

(12) **EUROPEAN PATENT APPLICATION**

(43) Date of publication:
05.08.2015 Bulletin 2015/32

(51) Int Cl.:
*G01V 1/38* (2006.01)    *G01V 1/00* (2006.01)

(21) Application number: 14305152.2

(22) Date of filing: 04.02.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: **Sercel**
**44470 Carquefou (FR)**

(72) Inventor: **Chene, Fabien**
**44350 GUERANDE (FR)**

(74) Representative: **Vidon Brevets & Stratégie**
**16B, rue de Jouanet**
**BP 90333**
**35703 Rennes Cedex 7 (FR)**

(54) **Method for obtaining an adapted sequence of shot predictions from a raw sequence of shot predictions**

(57)     Method for obtaining an adapted sequence of shot predictions $(t_n)$ from a raw sequence of shot predictions $(s_n)$, comprising: for at least one constraint type, determining (221) one or several fixed constraints and one or several free constraints; for said at least one constraint type, selecting (222) only a part of the free constraint(s), based on the fixed constraint(s), N free constraint(s) being selected; transforming (224) each fixed constraint into a first equality constraint and each selected free constraint into a second equality constraint; at least for a given constraint pattern (comprising the first equality constraint(s) and none, some or all of the second equality constraint(s)): minimizing (24), under the given constraint pattern, a function having as argument a sequence of residuals $(x_n)$, with $x_n \stackrel{\text{def}}{=} t_n - s_n$; and verifying (24) that the equality constraints of the given constraint pattern are enforced with the result of the minimizing step; obtaining (26,27) the adapted sequence, from the result of step d) and the raw sequence.

Figure 2

EP 2 902 810 A1

**Description**

## 1. FIELD OF THE INVENTION

The field of the invention is that of geophysical data acquisition.

More precisely, the invention relates to marine seismic acquisition involving one or several vessels to achieve an imaging of the seabed earth crust.

In particular, the invention relates to a technique for managing shots, and more precisely for obtaining an adapted sequence of shot predictions ($t_n$) from a raw sequence of shot predictions ($s_n$), with $n \in \{0, ...,M - 1\}$, each shot prediction defining a time or a distance to reach a shot point given a shot predict point used as a reference, a direction and a velocity.

The present invention can be applied notably to the oil exploration industry, but may also be applied to any field using a geophysical data acquisition network in a marine environment.

## 2. TECHNOLOGICAL BACKGROUND

### 2.1 Principle of a seismic marine acquisition

To perform a seismic marine acquisition in a survey area, it is common to use seismic sources (guns, vibratory sources, ..) and seismic sensors. The sensors are housed in cables, called streamers (or linear antennas). Several streamers are used together to form an array of thousands of sensors. Sources are towed by one or several shooter vessels, and streamers are towed by one or several listener vessels. A same vessel can be both shooter vessel and listener vessel (i.e. can tow one or several streamers and one or several seismic sources).

To collect the geophysical data in the marine environment, the seismic sources (towed by at least one shooter vessel) are activated to generate single pulses or continuous sweep of energy. The signals generated by each source travels through the layers of the earth crust and the reflected signals are captured by the sensors (hydrophones) in the streamers (towed by at least one listener vessel).

After each shot, two files are created: a first file containing seismic data provided by seismic sensors (comprised in seismic streamers) and a second file containing information about the shot on shooter vessel. These first and second files are then combined to form a complete third file (also called SEG-D file). The interpretation of the seismic data contained in the SEG-D files is used to compute a 3D image of the earth crust.

Each theoretical location, where a seismic source must shoot, is a shot point location (also referred to as "shot point"), defined by its geographical coordinates (latitude/longitude and/or easting northing). When the source reaches this shot point, the gun is activated and produces an explosion. The set of shot points of all seismic sources is called "preplot".

The acquisition process is controlled and monitored by a navigation system (also referred to as INS, for "Integrated Navigation System"), which is onboard a master vessel (also referred to as "master speed vessel") and whose role is to compute position of sensors and sources, drive vessels along their acquisition path, according to the preplot geometry, and to activate sources to perform seismic acquisition at desired location (shot points).

The navigation system determines the moment of firing for each shot point, according to the positions of the various system components. This moment, also referred to as "shot time", is noted below ST.

The actual positions of all equipments (hydrophones and guns) are known thanks to well-known measure means (GPS, RGPS, acoustics, compasses, depth sensors...).

### 2.2 Example of a multi-vessel operation

To further increase the quality of seismic imaging, the seismic surveys are now performed in multi-vessel operation, in order to obtain a wide azimuth illumination of the earth's crust (this explaining why, in this case, the preplot is referred to as "wide azimuth preplot" or "WAZ preplot"). A multi-vessel seismic system often comprises several shooter vessels and several listener vessels. A same vessel can be both shooter vessel and listener vessel.

The wide azimuth preplot defines a sequence of shot points, where the shots of the various vessels are interlaced.

The shooting order of the sources, and consequently of the vessels, is also defined in the wide azimuth preplot. The shooting order of the vessels must be respected and performed as close as possible to the geographic coordinates of the shot points specified in the wide azimuth preplot. So that the shooting order is complied, the various vessels must be synchronized.

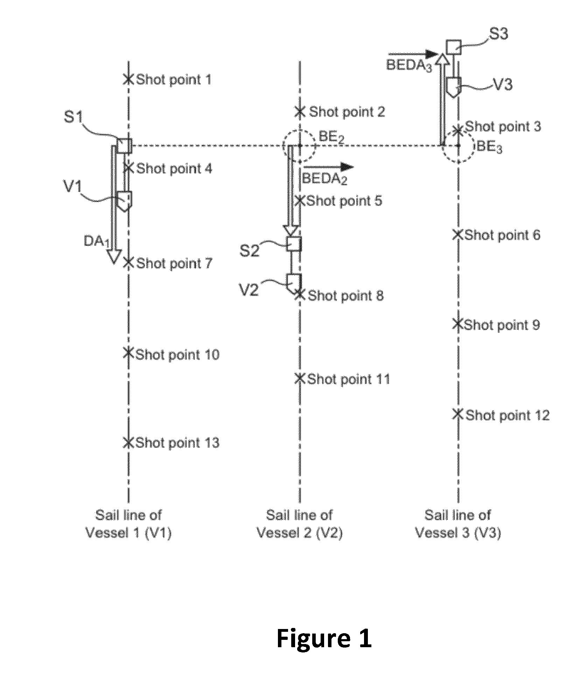

In the simplified example of wide azimuth preplot of **figure** 1, there are three shooter vessels V1, V2 and V3, each towing a source S1, S2 and S3 respectively. We assume the shooter vessel V1 is the master speed vessel. We also assume that the rank of a shot is identical to the rank of the corresponding shot point (for example, the seventh shot is called "shot 7" and must be made at "shot point 7"). This example of wide azimuth preplot can be resumed as follows:

- the shooter vessel V1 is in charge of shot 1, shot 4, shot 7, shot 10, shot 13, etc, which must be carried out respectively at shot point 1, shot point 4, shot point 7, shot point 10, shot point 13, etc;
- the shooter vessel V2 is in charge of shot 2, shot 5, shot 8, shot 11, etc, which must be carried out respectively at shot point 2, shot point 5, shot point 8, shot point 11, etc; and
- the shooter vessel V3 is in charge of shot 3, shot 6, shot 9, shot 12, etc, which must be carried out respectively at shot point 3, shot point 6, shot point 9, shot point 12, etc.

In this example, the three shooter vessels V1, V2 and V3 are supposed to be aligned, but the three shot points corresponding to three successive shots (each carried out by a different one the three shooter vessels) are not aligned (e.g. shot points 1, 2 and 3 are not aligned). However, and as shown in figure 1, we assume shooter vessel V2 is ahead and shooter vessel V3 is late.

We present now the calculation of a theoretical shot time associated with a shot point.

For each seismic source, a path (also referred to as "sail line" or "navigation line") is defined, which passes through « waypoints », including the shot points associated with this seismic source.

The projection, on this path, of the speed of a given point X (e.g. a reference point of the seismic source) is called "speed along" (and noted SA(X)).

The distance between two points X and Y projected on this path is called "Distance Along" (and noted DA(X,Y)).

The point used to compute the theoretical shot time (ST) is called "predict point" (and noted PP). It can be a reference point located on the seismic source or on the shooter vessel which tows this seismic source.

For a given seismic source S and a given predict point PP, the theoretical shot time ST associated with a given shot point SP is computed according to the following formula: *ST = (DA(SP, PP) / SA(PP)) + current time*

For example, in figure 1, for the seismic source S1 and a given predict point PP corresponding to a reference point of the seismic source S1, the theoretical shot time ST associated with the "shot 7" is computed according to the following formula (also referred to as "calculation in distance mode"):

$$ST\ (shot\ 7) = (DA(\text{``shot point 7''}, PP)\ /\ SA(PP)) + current\ time$$

It must be noted that *DA("shot point 7", PP)* is noted $DA_1$ in figure 1.

Thus, from the theoretical shot times ST associated with a plurality of shot points, the navigation system obtains a raw sequence of shot predictions $(s_n)$, with $n \in \{0, ..., M - 1\}$. Each of the M shot predictions of the raw sequence defines a time (or a distance) to reach a shot point, given the shot predict point used as a reference, a direction and a velocity.

2.3 "Distance Along" errors and timing constraints

There is a need to optimize the along-errors on shot locations, defined as follows:

- if we work on distances, the "Distance Along" errors (also referred to as "DA errors"), i.e., for a given shot by a shooter vessel, the distance between the theoretical shot point and the location where the shot was actually made, projected on the sail line of the shooter vessel;
- if we work on times, the "Time Along" errors (also referred to as "TA errors"), i.e., for a given shot by a shooter vessel, the difference between the theoretical shot time and the time at which the shot was actually made. We have also the following relation: TA error = DA error / velocity of the shot predict point.

However, there is also a need to enforce timing constraints. Among all the possible constraints, there are notably (but not exclusively):

- the constraint of the minimal shot time interval (also referred to as "min STI"), i.e. the minimum time interval that must be maintained between two successive shots to avoid any interference. If this value is not respected, there is a shot overlap and the two shots are not considered valid;
- the constraint of the maximum shot interval (also referred to as "max STI"), which is useful e.g. for marine mammal observer regulation ("MMO regulation");
- the constraints to synchronize two different sources.

These constraints can possibly be set for a single vessel or for a combination of vessels (multi-vessel seismic system).

There are already some known solutions used by the industry to enforce these timing constraints, by adapting the raw sequence of shot predictions ($s_n$).

The first and simplest known solution is to skip shots that cannot enforce the constraint on the minimal shot time interval (min STI). A drawback of this first known solution is that skipping shots is a poor solution, as only a certain number of missed shots is accepted per line.

A second known solution is to use the mode "combo". It basically consists in delaying shots so that constraints on the minimal shot time interval (min STI) are enforced. A drawback of this second known solution is that delaying shots enforces the min STI constraint, but does not spread the along-errors. Instead, generally only one source has a systematic error.

A third known solution, more specific to 4D surveys, consists in the following: given that the constraints on the shot prediction generally come from the mismatch between current gun-skew and baseline gun-skew, the idea is to artificially adjust the current gun skew in some manner, in order to share the along-errors between the two sources - it more or less supposes that there are two sources involved. A drawback of this third known solution is that adjusting the current gun skew spreads the along-errors only on two sources, whereas many other points could be used to spread the along-errors. Moreover, it shares the along-errors by trying to minimize the sum of errors using two points, one per source, which is not the best criterion.

For information, a 4D survey or 4D acquisition (well known in the field of seismic) is to repeat later a 2D or 3D acquisition, in order to analyze the changes between two periods, typically to monitor a reservoir.

A fourth known solution is to use a shot predict point located at the barycentre of the sources, in order to automatically share along-errors between the sources implied. A drawback of this fourth known solution is that it is not optimal, as errors are performed even if constraints are not active. Also, depending on the nature of the gun-skew mismatch, it may or may not improve the situation.

## 3. GOALS OF THE INVENTION

The invention, in at least one embodiment, is aimed especially at overcoming these different drawbacks of the prior art.

More specifically, it is a goal of at least one embodiment of the invention to provide a technique for obtaining an adapted sequence of shot predictions ($t_n$) from a raw sequence of shot predictions ($s_n$), this technique being used to optimize the along-errors while enforcing timing constraints.

It is another goal of at least one embodiment of the invention to provide a technique of this kind which can be used independently of the number of sources, the number of vessel involved, the vessel shooting pattern used or the nature of the survey. Examples of shooting patterns, with three vessels involved (V1, V2 and V3):

- [V1,V2,V3];[V1,V2,V3];... (in this case, the shooting pattern size is 3) ;
- [V1,V3,V1,V2];[V1,V3,V1,V2];... (in this case, the shooting pattern size is 4).

It is an additional goal of at least one embodiment of the invention to provide a technique of this kind that is simple to implement and inexpensive.

## 4. SUMMARY OF THE INVENTION

A particular embodiment of the invention proposes a method for obtaining an adapted sequence of shot predictions ($t_n$) from a raw sequence of shot predictions ($s_n$), with $n \in \{0, ..., M - 1\}$, each shot prediction defining a time or a distance to reach a shot point. The method comprises:

a) for at least one constraint type, determining one or several fixed constraints and one or several free constraints defined as follows: a constraint of a given constraint type, applying on a pair of elements belonging to the adapted sequence and having index values i and j, is defined as fixed, respectively free, if a pair of elements belonging to the raw sequence and having said index values i and j does not comply, respectively complies, with a constraint of said given constraint type;

b) for said at least one constraint type, selecting only a part of said free constraint(s), based on said fixed constraint(s), N free constraint(s) being selected;

c) transforming each fixed constraint into a first equality constraint and each selected free constraint into a second equality constraint;

d) at least for a given constraint pattern, comprising the first equality constraint(s) and none, some or all of the second equality constraint(s): minimizing, under said given constraint pattern, a function having as argument a sequence of residuals ($x_n$), with $x_n \overset{\text{def}}{=} t_n - s_n$; and verifying that the equality constraints of said given constraint pattern are enforced with the result of the minimizing step;

e) obtaining the adapted sequence, from the result of step d) and the raw sequence.

The general principle is to model the shot prediction process so that it becomes a mathematical problem of minimizing a multivariable function (having the sequence of residuals ($x_n$) as argument), with a set of linear constraints (constraint pattern comprising equality constraints). This allows to optimize the along-errors by spreading them over multiple shot points. Indeed, the residuals are representative of the along-errors. The proposed method can be used with any raw sequence of shot predictions ($s_n$), independently of the number of sources, the number of vessel involved, the vessel shooting pattern used or the nature of the survey.

This particular embodiment relies on a wholly novel and inventive approach because the man skilled in the art was not encouraged to use such a minimization of a multivariable function. Indeed, the function to minimize has several variables with inequality constraints, and the mathematical laws say that each inequality constraint has to be either ignored or transformed into an equality constraint. This involves heavy combinatorial calculations, clearly discouraging the man skilled in the art to implement such a solution in the particular context of inequality-type constraints.

To overcome these heavy combinatorial calculations, it is proposed to reduce the constraint combinations to be considered, while maintaining results as optimal as possible. For this purpose, the idea is to define fixed constraints and free constraints, and to select only some of the free constraints, which are adjacent to the fixed constraints. Thus, only N free constraints are selected in step b), among the total number of free constraints obtained in step a).

This allows to improve all cases where the raw sequence of shot predictions is constrained. As detailed below, this is for example the case when a min shot time interval (min STI) must be enforced, or when a max shot time interval (max STI) must be enforced, or when two sources are correlated.

In a particular implementation, each shot prediction defines a time to reach a shot point, and the constraints are temporal constraints. In an alternative implementation, each shot prediction defines a distance to reach a shot point (distance and time are linked together by the velocity and the direction), and the constraints are distance constraints.

A direct application of the invention is to optimize along-errors made in 4D surveys, and then improve the repeatability. However, the present invention is not limited to the 4D surveys.

According to a particular feature, step b) comprises, for each fixed constraint applying on a pair of elements belonging to the adapted sequence and having index values i and j:

- for at least one selected constraint type, selecting free constraint(s) each applying on a pair of elements belonging to the raw sequence and having index values i' and j', with j' a value belonging to a first set of values around i; and/or
- for at least one selected constraint type, selecting free constraint(s) each applying on a pair of elements belonging to the raw sequence and having index values i" and j", with j" a value belonging to a second set of values around j.

This allows to simply reduce the number of selected free constraints, and therefore the size of the linear system to solve for each given constraint pattern. For example, the size of the first and second sets of values is equal to four, this leading up to eight adjacent selected free constraints for each fixed constraints.

According to a particular feature, if the number N of selected free constraint(s) is greater than a predetermined maximum number $N_{max}$, at least one supplemental iteration of step b) is carried out with, for a current particular selected constraint type, a reduced first set of values around i and/or a reduced second set of values around j.

$N_{max}$ is adjusted depending on the device (machine) which carries out the method (e.g. on each vessel or on only one vessel, which transmits the result to the other vessels of a multi-vessel seismic system), and the time available to do the calculations.

According to a particular feature, several constraint types are used, each having a different priority, and in that said current particular selected constraint type has the lowest priority.

Thus, only constraints of the lowest priority constraint type are discarded.

According to a particular feature, if a supplemental iteration of step b) is not possible, for said current particular selected constraint type, because it is not possible to reduce any more the first set of values around i and/or the second set of values around j, then at least one supplemental iteration of step b) is carried out with, for a next particular selected constraint type, a reduced first set of values around i and/or a reduced second set of values around j. Said next particular selected constraint type has the next lower priority after the priority of said current particular selected constraint type.

Thus, if necessary, the aforesaid discarding mechanism can be repeated with other level(s) of priority constraint type.

According to a particular feature, said at least one constraint type belongs to the group comprising:

- a constraint type of the form: $s_{i+C} - s_i \geq k$, with j=i+C and k a minimal shot time interval;
- a constraint type of the form: $s_{i+C} - s_i \leq k$, with j=i+C, C a determined value and k a maximal shot time interval;
- a constraint type of the form: $s_{i+C} - s_i == k$, with j=i+C, C a determined value and k a fixed shot time interval;
- a constraint type of the form: $s_{i+C} - s_i \geq k$, $s_{i+C}$ relating to a vessel vx and $s_i$ relating to a vessel vy, with j=i+C, C a determined value and k a minimal shot time interval between vessels vx and vy;
- a constraint type of the form: $s_{i+C} - s_i \leq k$, $s_{i+C}$ relating to a vessel vx and $s_i$ relating to a vessel vy, with j=i+C, C a determined value and k a maximal shot time interval between vessels vx and vy;
- a constraint type of the form: $s_{i+C} - s_i == k$, $s_{i+C}$ relating to a vessel vx and $s_i$ relating to a vessel vy, with j=i+C, C a determined value and k a fixed shot time interval between vessels vx and vy;
- a constraint type of the form: $s_{i+\#v} - s_i \geq k$, with k a minimal shot time interval by vessel and #v the number of vessels;
- a constraint type of the form: $s_{i+\#v} - s_i \leq k$, with j=i+#v and k a maximal shot time interval by vessel and #v the number of vessels;
- a constraint type of the form: $s_{i+\#v} - s_i == k$, with j=i+#v, k a fixed shot time interval by vessel and #v the number of vessels or the number of sequence elements between two shots of a given vessel;
- a constraint type of the form: $s_{i+\#v} - s_i \geq k$, $s_i$ relating to a vessel vx, with j=i+#v, k a minimal shot time interval for the vessel vx and #v the number of vessels or the number of sequence elements between two shots of a given vessel;
- a constraint type of the form: $s_{i+\#v} - s_i \leq k$, $s_i$ relating to a vessel vx, with j=i+#v, k a maximal shot time interval for the vessel vx and #v the number of vessels or the number of sequence elements between two shots of a given vessel;
- a constraint type of the form: $s_{i+\#v} - s_i == k$, $s_i$ relating to a vessel vx, with j=i+#v, k a fixed shot time interval for the vessel vx and #v the number of vessels or the number of sequence elements between two shots of a given vessel.

This list is not exhaustive. Other temporal constraints can be used. Distance constraints can also be used, in the aforesaid alternative implementation (in which each shot prediction defines a distance to reach a shot point).

According to a particular feature, the method further comprises:

b') for at least one index value of n, selecting two free constraints of the form: $x_n \leq L/2$ and $x_n \geq -L/2$, with L/2 being a predetermined tolerance.

L is the height of a validity box around a theoretical shot point. These additional constraints ($|xi| <= L/2$, with xi = ti - si), of the "tolerance zone" type, are often encountered in 4D surveys. The idea of adding these new constraints is to minimize the number of missed shots when there are requirements of "tolerance zone" kind.

According to a particular feature, in step d), the function is of the form: $f : x \to \frac{1}{2} x^T . x$

Thus the criterion used in this particular case is based on the minimum of the squared along-errors sum, which should be close to user expectations (especially for 4D surveys). Moreover, this criterion leads to a linear resolution of the problem, which has several advantages, including simplicity and clear convergence of the solution.

According to a particular feature, step d) comprises, for said given constraint pattern:

- determining the index values of the residuals involved in the given constraint pattern;
- minimizing said function using the involved residuals but not the non-involved residuals, thus obtaining a partial result giving a result value only for said involved residuals;
- obtaining a complete result from said partial result, by setting to zero the result value of the non-involved residuals.

This allows optimization of matrix computation, reusing as much as possible matrices of the same size to avoid reallocation of memory, and taking into account only the necessary number of unknown.

According to a particular feature, for each residual having an index value belonging to the set {0, ..., *SPS* - 1}, with SPS the vessel shooting pattern size, and involved in the given constraint pattern, a supplemental constraint of the form $x_n = 0$ is used in the step of minimizing said function.

Thus, the algorithm of the proposed solution is further improved.

According to a particular feature, said step d) is iterated $2^N$ times, each iteration being carried out with a different constraint pattern comprising the first equality constraints and a combination among all the possible combinations of the N second equality constraints, and in that the result of step d) is the minimum of the results obtained in the $2^N$ iterations.

Thus, the algorithm of the proposed solution is further improved.

According to a particular feature, the method further comprises the following initial steps, carried out before step a):

- detecting missed shots;

- modifying the raw sequence, by deleting the detected missed shots, for steps a) to e);

and the method further comprises the following final step, carried out after step e):

- inserting the missed shots in the adapted sequence.

Thus, the algorithm of the proposed solution is further improved.

According to a particular feature, when step d) gives no result, at least one supplemental iteration of steps a) to d) is carried out, each supplemental iteration using a shorter raw sequence than in the previous iteration.

Thus, the algorithm of the proposed solution is further improved.

According to a particular feature, several constraint types are used, each having a different priority. If a supplemental iteration of steps a) to d) is not possible, because it is not possible to reduce any more the raw sequence, then at least one supplemental iteration of steps a) to d) is carried out discarding the constraint type having the lowest priority.

Thus, a new attempt can be made and only constraints of the lowest priority constraint type are discarded. If necessary, this discarding mechanism can be repeated with other level(s) of priority constraint type.

According to a particular feature, the method further comprises the following step carried out after step b):

- splitting said raw sequence of shot predictions into at least two raw sub-sequences using the following rule: for a given pair of first and second consecutive raw sub-sequences, the index value i-1 of a last element of said first raw sub-sequence and the index value i of a first element of said second raw sub-sequence are such that:

   * there is no fixed constraint or selected free constraint applying on a pair of elements belonging to the adapted sequence and having at least one of said index values i-1 and i; and
   * there is no fixed constraint or selected free constraint applying on a pair of elements belonging to the adapted sequence and having respectively an index value lower or equal to i-1 and an index value greater or equal to i;

steps b) to e) are carried out for each raw sub-sequence, generating an adapted sub-sequence from each raw sub-sequence,

and the method further comprises the following step:

- combining the adapted sub-sequences to obtain a complete adapted sequence.

Thus, each adapted sub-sequence can be optimized separately.

In another embodiment, the invention pertains to a computer program product comprising program code instructions for implementing the above-mentioned method (in any of its different embodiments) when said program is executed on a computer or a processor.

In another embodiment, the invention pertains to a non-transitory computer-readable carrier medium, storing a program which, when executed by a computer or a processor causes the computer or the processor to carry out the above-mentioned method (in any of its different embodiments).

In another embodiment, the invention pertains to a device for obtaining an adapted sequence of shot predictions $(t_n)$ from a raw sequence of shot predictions $(s_n)$, with $n \in \{0, ..., M - 1\}$, each shot prediction defining a time or a distance to reach a shot point. The device comprises:

- means for determining, for at least one constraint type, one or several fixed constraints and one or several free constraints defined as follows: a constraint of a given constraint type, applying on a pair of elements belonging to the adapted sequence and having index values i and j, is defined as fixed, respectively free, if a pair of elements belonging to the raw sequence and having said index values i and j does not comply, respectively complies, with a constraint of said given constraint type;
- means for selecting, for said at least one constraint type, only a part of said free constraint(s), based on said fixed constraint(s), N free constraint(s) being selected;
- means for transforming each fixed constraint into a first equality constraint and each selected free constraint into a second equality constraint;
- at least for a given constraint pattern, comprising the first equality constraint(s) and none, some or all of the second equality constraint(s): means for minimizing, under said given constraint pattern, a function having as argument a sequence of residuals $(x_n)$, with $x_n \stackrel{\text{def}}{=} t_n - s_n$; and means for verifying that the equality constraints of said given constraint pattern are enforced with the result obtained with the means for minimizing;

- means for obtaining the adapted sequence, from the result obtained with the means for minimizing and the raw sequence.

Advantageously, the device comprises means for implementing the steps it performs in the process as described above, in any of its various embodiments.

## 5. LIST OF FIGURES

Other features and advantages of embodiments of the invention shall appear from the following description, given by way of an indicative and non-exhaustive examples and from the appended drawings, of which:

- Figure 1, already discussed in relation to the prior art, shows a simplified example of wide azimuth preplot;
- Figure 2 is a flowchart of a particular embodiment of the method according to the invention;
- Figure 3 shows the simplified structure of a device according to a particular embodiment of the invention; and
- Figure 4 is a flowchart of an alternative embodiment of the method according to the invention.

## 6. DETAILED DESCRIPTION

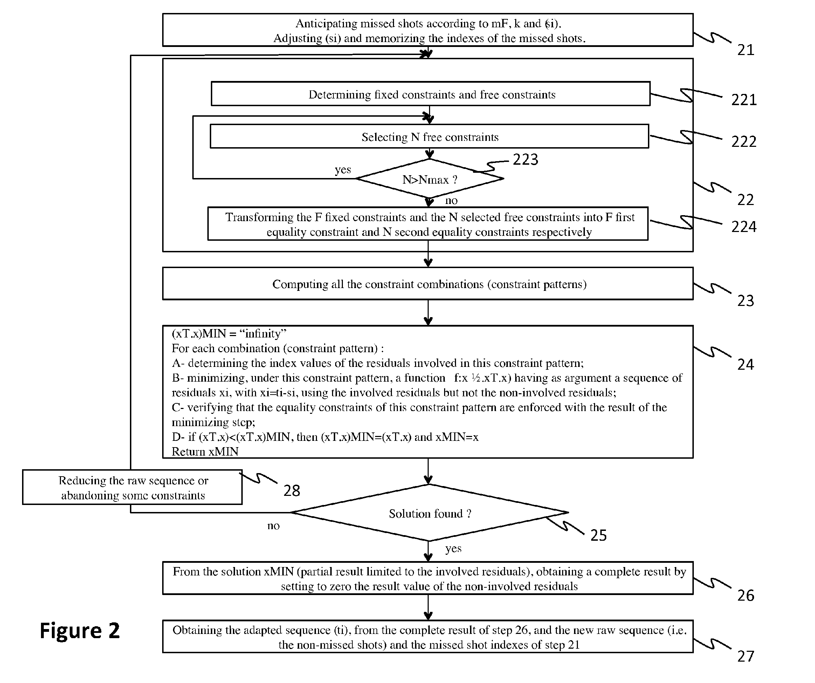

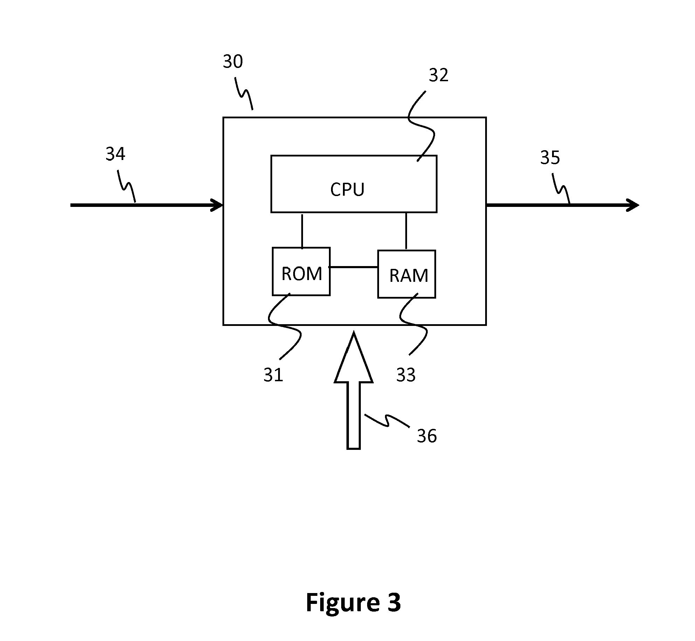

Referring now to **figure 2,** we present a method according to a particular embodiment of the invention. This method is carried out by a device (for more details about this device, see below description of figure 3).

The input is a raw sequence of shot predictions $(s_n)$, with $n \in \{0, ..., M - 1\}$ and the output is an adapted sequence of shot predictions $(t_n)$, with $n \in \{0,..., M - 1\}$. Each shot prediction defines a time or a distance to reach a shot point.

In the following description, we consider a time implementation in which each shot prediction defines a time to reach a shot point (i.e. we work on times). This is only an example of implementation and an alternative implementation (distance implementation) would be to work on distances instead of times, distances and times being linked together by the velocity and the direction of the shot predict point.

The raw sequence of shot predictions is for example $(s_n) = \{5, 12, 15, 22, 24\}$, which means that the next shot to come will be due in 5 seconds, next one in 12 seconds, and so on (i.e. $s_0=5$ ; $s_1=12$ ; $s_2=15$ ; $s_3=22$ and $s_4=24$).

Also given as input, a set of one or several constraint types.

In the following description, in order to facilitate the understanding of the proposed solution, we consider a single constraint type of the form: $s_{i+1} - s_i \geq k$ (i.e. $s_j - s_i \geq k$, with j=i+C and C=1), with k a minimal shot time interval (also referred to as "constraint on the min STI").

This is only an example of and other constraint types can be used (alone or in combination), among the following list:

- a constraint type of the form: $s_{i+C} - s_i \leq k$, with j=i+C, C a determined value and k a maximal shot time interval;
- a constraint type of the form: $s_{i+C} - s_i == k$, with j=i+C, C a determined value and k a fixed shot time interval;
- a constraint type of the form: $s_{i+C} - s_i \geq k$, $s_{i+C}$ relating to a vessel vx and $s_i$ relating to a vessel vy, with j=i+C, C a determined value and k a minimal shot time interval between vessels vx and vy;
- a constraint type of the form: $s_{i+C} - s_i \leq k$, $s_{i+C}$ relating to a vessel vx and $s_i$ relating to a vessel vy, with j=i+C, C a determined value and k a maximal shot time interval between vessels vx and vy;
- a constraint type of the form: $s_{i+C} - s_i == k$, $s_{i+C}$ relating to a vessel vx and $s_i$ relating to a vessel vy, with j=i+C, C a determined value and k a fixed shot time interval between vessels vx and vy;
- a constraint type of the form: $s_{i+\#v} - s_i \geq k$, with k a minimal shot time interval by vessel and #v the number of vessels;
- a constraint type of the form: $s_{i+\#v} - s_i \leq k$, with j=i+#v and k a maximal shot time interval by vessel and #v the number of vessels;
- a constraint type of the form: $s_{i+\#v} - s_i == k$, with j=i+#v, k a fixed shot time interval by vessel and #v the number of vessels or the number of sequence elements between two shots of a given vessel;
- a constraint type of the form: $s_{i+\#v} - s_i \geq k$, $s_i$ relating to a vessel vx, with j=i+#v, k a minimal shot time interval for the vessel vx and #v the number of vessels or the number of sequence elements between two shots of a given vessel;
- a constraint type of the form: $s_{i+\#v} - s_i \leq k$, $s_i$ relating to a vessel vx, with j=i+#v, k a maximal shot time interval for the vessel vx and #v the number of vessels or the number of sequence elements between two shots of a given vessel;
- a constraint type of the form: $s_{i+\#v} - s_i == k$, $s_i$ relating to a vessel vx, with j=i+#v, k a fixed shot time interval for the vessel vx and #v the number of vessels or the number of sequence elements between two shots of a given vessel;
- etc.

**Step 21**

In step 21, the device discards shots that are impossible to perform.

More precisely, the device detects (anticipates) missed shots, i.e. detects shots which will inevitably be missed, according to mF (missed factor), k (min STI) and $(s_n)$ (initial raw sequence of shot predictions). Indeed, if the min STI is too high, this would lead to shift a lot the prediction on each point, and therefore to shoot with significant along-errors.

Then the device modifies the initial raw sequence, by deleting the elements corresponding to detected missed shots. In other words, we choose to give up some shots. As described below, in step 27 these deleted missed shots are reinserted in the adapted sequence.

For example, we consider: $(s_n)$ = {-1,1,3,5,7} with k = 3. The algorithm output would give: $(t_n)$ = {-1,2,5,8,11}. If mF=1 (i.e. if we tolerate being late of not more than one shot), the device anticipates $s_2$=3 as a missed shot, because $t_2 >= s_{2+mF}$, i.e. $t_2 >= s_3$), and we apply the following algorithm. Then $s_2$ is deleted and the new raw sequence of shot predictions (used in the next steps) becomes: $(s_n)$ = {-1,1,5,7} and the index 2 is stored as a missed shot index.

**Step 22**

Step 22 comprises several steps (221 to 224).

In step 221, for the aforesaid single constraint type $(s_{i+1} - s_i \geq k)$, the device determines one or several fixed constraints and one or several free constraints. Fixed constraints and constraints are defined as follows: a constraint of a given constraint type, applying on a pair of elements belonging to the adapted sequence $(t_n)$ and having index values i and j, is defined as fixed, respectively free, if a pair of elements belonging to the raw sequence $(s_n)$ and having said index values i and j does not comply, respectively complies, with a constraint of the given constraint type.

We assume that F fixed constraints are obtained in step 221.

For example, if we consider $(s_n)$ = {-1,1,3,4,6} with k=1.5, and a single constraint type of the form: $s_{i+1} - s_i \geq k$ (i.e. j=i+1), the device obtains in step 221:

- for (j=1, i=0): the free constraint $t_1 - t_0 \geq k$, because $s_1 - so = 2$
- for (j=2, i=1): the free constraint $t_2 - t_1 \geq k$, because $s_2 - s_1 = 2$
- for (j=3, i=2): the fixed constraint $t_3 - t_2 \geq k$, because $s_3 - s_2 = 1$
- for (j=4, i=3): the free constraint $t_4 - t_3 \geq k$, because $s_4 - s_3 = 2$

In step 222, based on the fixed constraints determined in step 221, the device selects only a part of the free constraints determined in step 221. We assume that N free constraints are selected.

In a particular embodiment of step 222, for each fixed constraint (of a given type) which applies on a pair of elements belonging to the adapted sequence and having index values i and j:

- for at least one selected constraint type (and preferentially, not only the given type but all the constraint types), the device selects free constraint(s) each applying on a pair of elements belonging to the raw sequence and having index values i' and j', with j' a value belonging to a first set of values around i (e.g. $j' \in \{i - mA + P, ..., i + mA + P\}$, with mA a maximum adjacent parameter and P the result of the Euclidean division of j-i by two); and
- for at least one selected constraint type (and preferentially, not only the given type but all the constraint types), the device selects free constraint(s) each applying on a pair of elements belonging to the raw sequence and having index values i" and j", with j" a value belonging to a second set of values around j (e.g. $j" \in \{j - mA + P, ..., j + mA + P\}$, with mA a maximum adjacent parameter and P the result of the Euclidean division of j-i by two).

The device also eliminates free constraint duplicates, which can be of two kinds: two identical free constraints (in this case, one is kept and the other is eliminated), or a free constraint applying on a pair of elements having same index values as a pair of elements on which applies a fixed constraint (in this case, the free constraint is eliminated).

In step 223, the devices checks whether N (the number N of free constraints selected in step 222) is greater than $N_{max}$, with $N_{max}$ a predetermined maximum number of selected free constraints. For example, $N_{max}$=10. However, $N_{max}$ is an arbitrary value, given in relation to calculation times already tested. $N_{max}$ can be adjusted depending on the device (which carries out the method) and the time available to perform the calculations. In other words, $N_{max}$ is estimated depending how much time we can spend determining a minimal solution.

If $N > N_{max}$, step 222 is carried out again (supplemental iteration), with a reduced first set of values around i and/or a reduced second set of values around j (e.g. with a lower value of the parameter mA), for a current particular selected constraint type. In a particular embodiment, each of the constraint types has a different priority, and the current particular selected constraint type is the one having the lowest priority.

This mechanism (iterations of step 222) can be repeated for the current particular selected constraint type. If a supplemental iteration of step 222 is not possible, for the current particular selected constraint type, because it is not possible to reduce any more the first set of values around i and/or the second set of values around j, then at least one supplemental iteration of step 222 is carried out with, for a next particular selected constraint type, a reduced first set of values around i and/or a reduced second set of values around j. The said next particular selected constraint type has the next lower priority after the priority of the current particular selected constraint type. For example, the list of constraint types is {"maxSTI=4", "minSTI=5"}, and the first constraint type of the list ("maxSTI=4" in this example) has the highest priority, and so on.

If $N \leq N_{max}$, the process goes to step 224, in which the device transforms each of the F fixed constraints into a first equality constraint and each of the N selected free constraints into a second equality constraint. Therefore, at the end of step 224 (and also 22), the device has obtained F first equality constraints and N second equality constraints.

With the aforesaid example of step 221 and if we assume N=2, the device obtains in step 224:

- for (j=3, i=2), one first equality constraint $t_3 - t_2 \geq k$ ;
- for (j=2, i=1) and (j=4, i=3), two second equality constraints: $t_2 - t_1 \geq k$ and $t_4 - t_3 \geq k$.

**Step 23**

In step 23, the device computes all the constraint combinations (also referred to as "constraint patterns") that are implied by the F first equality constraints and the N second equality constraints, where each constraint pattern comprises the F first equality constraints and a combination among all the possible combinations of the N second equality constraints. One can see that the combinatorial is $\sum_{l=0}^{N} C_N^l = 2^N$.

For example, if we have one first equality constraint C1 (F=1) and two second equality constraints C2 and C3 (N=2), then we have $2^2 = 4$ combinations: {C1}, {C1,C2}, {C1,C3}, {C1,C2,C3}.

**Step 24**

In step 24, a variable $(x^T x)_{MIN}$ is initialized to "infinity".

Then, for each of the $2^N$ combinations (constraint patterns) obtained in step 23, the device carries out the following steps:

A. determining the index values of the residuals involved in this constraint pattern;

B. minimizing, under this constraint pattern, a function (for example $f: x \rightarrow \frac{1}{2} x^T . x$) having as argument a sequence

of residuals $(x_n)$, with $x_n \overset{\text{def}}{=} t_n - s_n$, using the involved residuals but not the non-involved residuals (this allows to reduce the size of the linear system to be solved), thus obtaining a partial result giving a result value only for the involved residuals;

C. verifying that the equality constraints of this constraint pattern are enforced with the result of the minimizing step;

D. if $(x^T . x) < (x^T . x)_{MIN}$, then $(x^T . x)_{MIN} = (x^T . x)$ and $x_{MIN} = x$.

Thus, the result of step 24 is $x_{MIN}$, i.e. the minimum of the results obtained in the $2^N$ iterations (partial result giving a result value only for the involved residuals).

Example to illustrate step A: we consider $(s_n) = \{-1,1,3,4,6\}$ with k = 1.5 There is a fixed constraint between 3 and 4 (i.e. $x_2$ and $x_3$). The device selects three free constraints: one between -1 and 1 (i.e. $x_0$ and $x_1$), one between 1 and 3 (i.e. $x_1$ and $x_2$), and one between 4 and 6 (i.e. $x_3$ and $x_4$). There are $2^3 = 8$ combinations (constraint patterns) of first and second equality constraints. Among these combinations, there is e.g. the following combination of two constraints (equations):

$$x_2 - x_1 = k + s_1 - s_2$$

$$x_3 - x_2 = k + s_2 - s_3$$

The residuals involved in this combination (constraint pattern) are $x_1$, $x_2$ and $x_3$, and the corresponding indexes are 1, 2 and 3. The non-involved residuals are $x_0$ and $x_4$.

Each of the $2^N$ iterations of step B consists in solving a linear system having a size varying between 1 and M (size of the new raw sequence outputted by step 21). Here we understand the importance of the selection step 222: without it, the device would have $2^{(M-F)}$ linear systems to solve. For example, with M=30 and F=4, the device would have $2^{26}$=67108864 linear systems to solve!

For a given iteration of step B, the problem can be summarized as follows: "Compute $\min_x f(x)$ under the constraints $A_p x = b$, where the constraint matrix $A_p$ depends on the first and second equality constraints of the constraint pattern considered for this iteration, and on the involved residuals. A different matrix is used in each iteration, therefore there are at most $2^N$ matrices $A_p$. Where $A_p$ and b are built as below, with constraints on the min STI:

$$t_{i+1} - t_i = k \Leftrightarrow x_{i+1} + s_{i+1} - x_i - s_i = k \Leftrightarrow x_{i+1} - x_i = k + s_i - s_{i+1}$$

For example, with $n \in \{0,1,2,3\}$:

$$x_1 - x_0 = k + s_0 - s_1$$

$$x_2 - x_1 = k + s_1 - s_2$$

$$x_3 - x_2 = k + s_2 - s_3$$

$$x_4 - x_3 = k + s_3 - s_4$$

In this example, we have:

$$A_p = \begin{pmatrix} -1 & 1 & 0 & 0 & 0 \\ 0 & -1 & 1 & 0 & 0 \\ 0 & 0 & -1 & 1 & 0 \\ 0 & 0 & 0 & -1 & 1 \end{pmatrix}$$

$$b = \begin{pmatrix} k + s_0 - s_1 \\ k + s_1 - s_2 \\ k + s_2 - s_3 \\ k + s_3 - s_4 \end{pmatrix}$$

The problem above is solved using a solving method of any kind (can be based on decompositions or iterative), and e.g. using Lagrange parameters: $L(x) = \frac{1}{2} x^T x + \mu^T (b - A_p x)$ where $\mu$ is the vector of the Lagrange parameters.

$$\frac{\partial L}{\partial x} = 0 \Rightarrow x = A_p{}^T \mu$$

$$\frac{\partial L}{\partial \mu} = 0 \Rightarrow b = A_p x$$

Hence $b = A_p A_p{}^T \mu \Rightarrow \mu = (A_p A_p{}^T)^{-1} b \Rightarrow x = A_p{}^T (A_p A_p{}^T)^{-1} b$

If $A_p$ is squared $\mathrm{x} = A_p^{-1} b$

In step B, for each residual having an index value belonging to the set {0, ..., *SPS* - 1}, with SPS the vessel shooting pattern size and involved in the constraint pattern, a supplemental constraint of the form $x_n = 0$ is used (the matrix $A_p$ comprises a supplemental line). Thus, the device does not modify the shot predictions for the SPS shots already done.

**Step 25**

In step 25, the device checks whether a solution $x_{MIN}$ has been found in step 24. If a solution has been found, the process goes to step 26. Otherwise, it goes to step 28.

**Step 26**

In step 26, from the solution $x_{MIN}$ found in step 24 (which is a partial result giving a result value only for the involved residuals), the device obtains a complete result from this partial result, by setting to zero the result value of the non-involved residuals.

In the above example, the residuals involved are $x_1$, $x_2$ and $x_3$, and the non-involved residuals are $x_0$ and $x_4$. After $x_0$ and $x_4$ have been set to zero, we obtain as complete result the following sequence of residuals ($x_n$): {$x_0$=0, $x_1$, $x_2$, $x_3$, $x_4$=0}.

**Step 27**

In step 27, the device obtains the adapted sequence ($t_n$), from the result of step 26, and the new raw sequence (i.e. the non-missed shots) and the missed shot indexes outputted from step 21.

We consider again the example of step 21: ($s_n$) = {-1,1,3,5,7} with k = 3. The algorithm would give: ($t_n$) = {-1,2,5,8,11}. If mF=1, the device anticipates $s_2$=3 as a missed shot. Then $s_2$ is deleted and the new raw sequence of shot predictions becomes: ($s_n$) = {-1,1,5,7} and index 2 is stored as a missed shot index. From ($s_n$) = {-1,1,5,7}, we obtain: ($t_n$) = {-1,2,5,8}. Then the missed shot is reinserted: ($t_n$) = {-1,2,missed,5,8}.

**Step 28**

In step 28, when no solution has been found in step 24, the device reduces the new raw sequence outputted by step 21, and the process goes back to step 22. In other words, the device uses a shorter raw sequence ($s_n$), with n $\in$ {0, ..., *M'* - 1} and M'<M.

For example, the shorter raw sequence comprises half of the values of the previous raw sequence: {$s_0$,...,$s_M$} => {$s_0$,...,$s_{(M/2)-1}$}. We could also take the 2/3, ¾, or M-1, etc.

If it is not possible to reduce any more the raw sequence ($M_{min}$ is reached), then at least one supplemental iteration of steps a) to d) is carried out discarding the constraint type having the lowest priority (i.e. some constraints are abandoned). As mentioned above, the list of constraint types is for example {"maxSTI=4", "minSTI=5"}, and the first constraint type of the list ("maxSTI=4" in this example) has the highest priority, and so on. If necessary, this discarding mechanism can be repeated with other level(s) of priority constraint type (before each new iteration, the constraint type having the lowest priority is discarded).

**Alternative embodiments**

It is clear that many other embodiments of the invention may be considered.

We may in particular provide the following supplemental constraint in step 24: $t_1$>0 (to being the preceding shot, this forces the next shot $t_1$ to be in the present).

We may also, for at least one index value, select two supplemental free constraints of the form: $x_i \leq L/2$ and $x_i \geq -L/2$, with L/2 a predetermined tolerance.

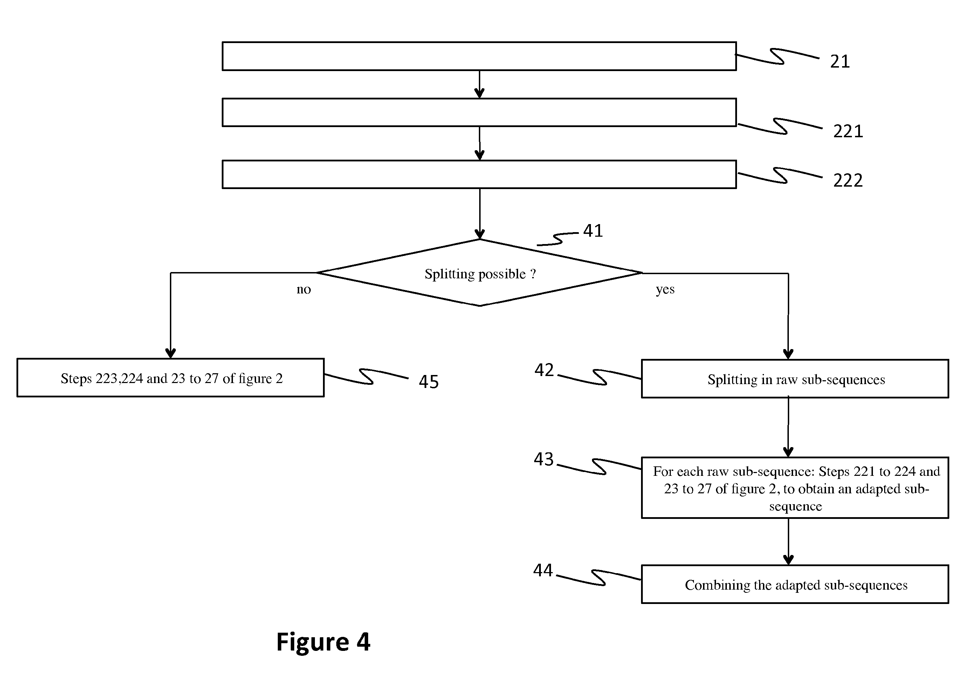

Referring now to **figure 4**, we present an alternative embodiment of the proposed method. This method is carried out by a device (for more details about this device, see below description of figure 3).

Steps 21, 221 and 222 have already been described above, in relation to figure 2.

In step 41, the device checks whether it is possible to split the raw sequence of shot predictions into at least two raw sub-sequences using a determined rule. If splitting is not possible, the process goes to step 45. Otherwise, it goes to step 42 and then steps 43 and 44.

The determined rule reads as follows: for a given pair of first and second consecutive raw sub-sequences, the index value i-1 of a last element of the first raw sub-sequence and the index value i of a first element of the second raw sub-sequence are such that:

> * there is no fixed constraint or selected free constraint applying on a pair of elements belonging to the adapted sequence and having at least one of the index values i-1 and i; and
> * there is no fixed constraint or selected free constraint applying on a pair of elements belonging to the adapted sequence and having respectively an index value lower or equal to i-1 and an index value greater or equal to i.

In step 45, the steps 223, 224 and 23 to 27 of figure 2 are carried out.

In step 42, the raw sequence is splitted into several raw sub-sequences.

In step 43, the steps 221 to 224 and 23 to 27 of figure 2 are carried out for each raw sub-sequence. Thus, an adapted sub-sequence is generated for each raw sub-sequence.

In step 44, the adapted sub-sequences are combined to obtain a complete adapted sequence.

<u>Figure 3</u> shows the simplified structure of a device (machine) according to a particular embodiment of the invention, which carries out the method shown in Figure 2 or 4 for example. In a single-vessel seismic system, this device is comprised for example in the single vessel. In a multi-vessel seismic system, this device is comprised either in a master vessel (which transmits the result to the other vessels) or in each vessel.

The device 30 comprises a non-volatile memory 31 (*e.g.* a read-only memory (ROM) or a hard disk), a volatile memory 33 (e.g. a random access memory or RAM) and a processor 32. The non-volatile memory 31 is a non-transitory computer-readable carrier medium. It stores executable program code instructions, which are executed by the processor 32 in order to enable implementation of the method described above with figure 2.

Upon initialization, the aforementioned program code instructions are transferred from the non-volatile memory 31 to the volatile memory 33 so as to be executed by the processor 32. The volatile memory 33 likewise includes registers for storing the variables and parameters required for this execution.

The devices receives as input 34 a raw sequence of shot predictions ($s_n$) and generates as output 35 an adapted sequence of shot predictions ($t_n$), with n $\in$ {0, ..., $M$ - 1}, under the constraints 36.

All the steps of the above method can be implemented equally well:

- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

**Claims**

1. Method for obtaining an adapted sequence of shot predictions ($t_n$) from a raw sequence of shot predictions ($s_n$), with $n \in$ {0, ... , $M$ - 1}, each shot prediction defining a time or a distance to reach a shot point, **characterized in that** it comprises:

   a) for at least one constraint type, determining (221) one or several fixed constraints and one or several free constraints defined as follows: a constraint of a given constraint type, applying on a pair of elements belonging to the adapted sequence and having index values i and j, is defined as fixed, respectively free, if a pair of elements belonging to the raw sequence and having said index values i and j does not comply, respectively complies, with a constraint of said given constraint type;
   b) for said at least one constraint type, selecting (222) only a part of said free constraint(s), based on said fixed constraint(s), N free constraint(s) being selected;
   c) transforming (224) each fixed constraint into a first equality constraint and each selected free constraint into a second equality constraint;
   d) at least for a given constraint pattern, comprising the first equality constraint(s) and none, some or all of the second equality constraint(s): minimizing (24), under said given constraint pattern, a function having as argument a sequence of residuals ($x_n$), with $x_n \overset{\text{def}}{=} t_n - s_n$; and verifying (24) that the equality constraints of said given constraint pattern are enforced with the result of the minimizing step;
   e) obtaining (26,27) the adapted sequence, from the result of step d) and the raw sequence.

**2.** Method according to claim 1, **characterized in that** step b) (222) comprises, for each fixed constraint applying on a pair of elements belonging to the adapted sequence and having index values i and j:

- for at least one selected constraint type, selecting free constraint(s) each applying on a pair of elements belonging to the raw sequence and having index values i' and j', with j' a value belonging to a first set of values around i; and/or
- for at least one selected constraint type, selecting free constraint(s) each applying on a pair of elements belonging to the raw sequence and having index values i" and j", with j" a value belonging to a second set of values around j.

**3.** Method according to claim 2, **characterized in that** if the number N of selected free constraint(s) is greater than a predetermined maximum number $N_{max}$, at least one supplemental iteration of step b) is carried out with, for a current particular selected constraint type, a reduced first set of values around i and/or a reduced second set of values around j.

**4.** Method according to claim 3, **characterized in that** several constraint types are used, each having a different priority, and **in that** said current particular selected constraint type has the lowest priority.

**5.** Method according to claim 4, **characterized in that**, if a supplemental iteration of step b) is not possible, for said current particular selected constraint type, because it is not possible to reduce any more the first set of values around i and/or the second set of values around j, then at least one supplemental iteration of step b) is carried out with, for a next particular selected constraint type, a reduced first set of values around i and/or a reduced second set of values around j, and **in that** said next particular selected constraint type has the next lower priority after the priority of said current particular selected constraint type.

**6.** Method according to any one of the claims 1 to 5, **characterized in that** said at least one constraint type belongs to the group comprising:

- a constraint type of the form: $s_{i+C} - s_i \geq k$, with j=i+C and k a minimal shot time interval;
- a constraint type of the form: $s_{i+C} - s_i \leq k$, with j=i+C, C a determined value and k a maximal shot time interval;
- a constraint type of the form: $s_{i+C} - s_i == k$, with j=i+C, C a determined value and k a fixed shot time interval;
- a constraint type of the form: $s_{i+C} - s_i \geq k$, $s_{i+C}$ relating to a vessel vx and $s_i$ relating to a vessel vy, with j=i+C, C a determined value and k a minimal shot time interval between vessels vx and vy;
- a constraint type of the form: $s_{i+C} - s_i \leq k$, $s_{i+C}$ relating to a vessel vx and $s_i$ relating to a vessel vy, with j=i+C, C a determined value and k a maximal shot time interval between vessels vx and vy;
- a constraint type of the form: $s_{i+C} - s_i == k$, $s_{i+C}$ relating to a vessel vx and $s_i$ relating to a vessel vy, with j=i+C, C a determined value and k a fixed shot time interval between vessels vx and vy;
- a constraint type of the form: $s_{i+\#v} - s_i \geq k$, with k a minimal shot time interval by vessel and #v the number of vessels;
- a constraint type of the form: $s_{i+\#v} - s_i \leq k$, with j=i+#v and k a maximal shot time interval by vessel and #v the number of vessels;
- a constraint type of the form: $s_{i+\#v} - s_i == k$, with j=i+#v, k a fixed shot time interval by vessel and #v the number of vessels or the number of sequence elements between two shots of a given vessel;
- a constraint type of the form: $s_{i+\#v} - s_i \geq k$, $s_i$ relating to a vessel vx, with j=i+#v, k a minimal shot time interval for the vessel vx and #v the number of vessels or the number of sequence elements between two shots of a given vessel;
- a constraint type of the form: $s_{i+\#v} - s_i \leq k$, $s_i$ relating to a vessel vx, with j=i+#v, k a maximal shot time interval for the vessel vx and #v the number of vessels or the number of sequence elements between two shots of a given vessel;
- a constraint type of the form: $s_{i+\#v} - s_i == k$, $s_i$ relating to a vessel vx, with j=i+#v, k a fixed shot time interval for the vessel vx and #v the number of vessels or the number of sequence elements between two shots of a given vessel.

**7.** Method according to any one of the claims 1 to 6, **characterized in that** it further comprises:

b') for at least one index value of n, selecting (222) two free constraints of the form: $x_n \leq L/2$ and $x_n \geq -L/2$, with L/2 being a predetermined tolerance.

8. Method according to any one of the claims 1 to 7, **characterized in that**, in step d), the function is of the form:

$$f : x \rightarrow \frac{1}{2} x^T . x$$

9. Method according to any one of the claims 1 to 8, **characterized in that** step d) comprises, for said given constraint pattern:

- determining the index values of the residuals involved in the given constraint pattern;
- minimizing said function using the involved residuals but not the non-involved residuals, thus obtaining a partial result giving a result value only for said involved residuals;
- obtaining a complete result from said partial result, by setting to zero the result value of the non-involved residuals.

10. Method according to claim 9, **characterized in that**, for each residual having an index value belonging to the set $\{0, ..., SPS - 1\}$, with SPS the vessel shooting pattern size, and involved in the given constraint pattern, a supplemental constraint of the form $x_n = 0$ is used in the step of minimizing said function.

11. Method according to any one of the claims 1 to 10, **characterized in that** said step d) is iterated $2^N$ times, each iteration being carried out with a different constraint pattern comprising the first equality constraints and a combination among all the possible combinations of the N second equality constraints, and **in that** the result of step d) is the minimum of the results obtained in the $2^N$ iterations.

12. Method according to any one of the claims 1 to 11, **characterized in that** it further comprises the following initial steps, carried out before step a):

- detecting (21) missed shots;
- modifying (21) the raw sequence, by deleting the detected missed shots, for steps a) to e);

and **in that** it further comprises the following final step, carried out after step e):

- inserting (27) the missed shots in the adapted sequence.

13. Method according to any one of the claims 1 to 12, **characterized in that**, when step d) gives no result, at least one supplemental iteration of steps a) to d) is carried out, each supplemental iteration using a shorter raw sequence than in the previous iteration.

14. Method according to claim 13, **characterized in that** several constraint types are used, each having a different priority, and **in that**, if a supplemental iteration of steps a) to d) is not possible, because it is not possible to reduce any more the raw sequence, then at least one supplemental iteration of steps a) to d) is carried out discarding (28) the constraint type having the lowest priority.

15. Method according to any one of the claims 1 to 14, **characterized in that** it further comprises the following step carried out after step b):

- splitting (42) said raw sequence of shot predictions into at least two raw sub-sequences using the following rule: for a given pair of first and second consecutive raw sub-sequences, the index value i-1 of a last element of said first raw sub-sequence and the index value i of a first element of said second raw sub-sequence are such that:

    * there is no fixed constraint or selected free constraint applying on a pair of elements belonging to the adapted sequence and having at least one of said index values i-1 and i; and
    * there is no fixed constraint or selected free constraint applying on a pair of elements belonging to the adapted sequence and having respectively an index value lower or equal to i-1 and an index value greater or equal to i;

in that steps b) to e) are carried out for each raw sub-sequence, generating an adapted sub-sequence from each raw sub-sequence,

15

and **in that** it further comprises the following step:

- combining (44) the adapted sub-sequences to obtain a complete adapted sequence.

16. Computer program product **characterized in that** it comprises program code instructions for implementing the method according to at least one of the claims 1 to 15, when said program is executed on a computer or a processor.

17. A non-transitory computer-readable carrier medium storing a computer program product according to claim 16.

18. Device for obtaining an adapted sequence of shot predictions ($t_n$) from a raw sequence of shot predictions ($s_n$), with n ∈ {0,..., $M$ - 1}, each shot prediction defining a time or a distance to reach a shot point, **characterized in that** it comprises:

- means for determining, for at least one constraint type, one or several fixed constraints and one or several free constraints defined as follows: a constraint of a given constraint type, applying on a pair of elements belonging to the adapted sequence and having index values i and j, is defined as fixed, respectively free, if a pair of elements belonging to the raw sequence and having said index values i and j does not comply, respectively complies, with a constraint of said given constraint type;
- means for selecting, for said at least one constraint type, only a part of said free constraint(s), based on said fixed constraint(s), N free constraint(s) being selected;
- means for transforming each fixed constraint into a first equality constraint and each selected free constraint into a second equality constraint;
- at least for a given constraint pattern, comprising the first equality constraint(s) and none, some or all of the second equality constraint(s): means for minimizing, under said given constraint pattern, a function having as argument a sequence of residuals ($x_n$), with $x_n \overset{\text{def}}{=} t_n - s_n$; and means for verifying that the equality constraints of said given constraint pattern are enforced with the result obtained with the means for minimizing;
- means for obtaining the adapted sequence, from the result obtained with the means for minimizing and the raw sequence.

**Figure 1**

EP 2 902 810 A1

Figure 2

Flowchart contents:

Anticipating missed shots according to mF, k and (si).
Adjusting (si) and memorizing the indexes of the missed shots. — 21

Determining fixed constraints and free constraints — 221

Selecting N free constraints — 222

N>Nmax ? — 223
yes
no

Transforming the F fixed constraints and the N selected free constraints into F first equality constraint and N second equality constraints respectively — 224

(group) — 22

Computing all the constraint combinations (constraint patterns) — 23

(xT.x)MIN = "infinity"
For each combination (constraint pattern) :
A- determining the index values of the residuals involved in this constraint pattern;
B- minimizing, under this constraint pattern, a function  f:x  ½.xT.x) having as argument a sequence of residuals xi, with xi=ti-si, using the involved residuals but not the non-involved residuals;
C- verifying that the equality constraints of this constraint pattern are enforced with the result of the minimizing step;
D- if (xT.x)<(xT.x)MIN, then (xT.x)MIN=(xT.x) and xMIN=x
Return xMIN — 24

Reducing the raw sequence or abandoning some constraints — 28

Solution found ? — 25
no
yes

From the solution xMIN (partial result limited to the involved residuals), obtaining a complete result by setting to zero the result value of the non-involved residuals — 26

Obtaining the adapted sequence (ti), from the complete result of step 26, and the new raw sequence (i.e. the non-missed shots) and the missed shot indexes of step 21 — 27

**Figure 3**

EP 2 902 810 A1

EP 2 902 810 A1

```
┌─────────────────────────────────────────────┐
│                                             │  ╲ 21
└─────────────────────────────────────────────┘
                      │
                      ▼
┌─────────────────────────────────────────────┐
│                                             │  ╲ 221
└─────────────────────────────────────────────┘
                      │
                      ▼
┌─────────────────────────────────────────────┐
│                                             │  ╲ 222
└─────────────────────────────────────────────┘
                      │
                      ▼          ╱ 41
              ◇─────────────────◇
      no  ────┤ Splitting possible ? ├──── yes
              ◇─────────────────◇
       │                              │
       ▼                              ▼
┌──────────────────────────┐   ┌──────────────────────────┐
│ Steps 223,224 and 23 to  │   │ Splitting in raw         │
│ 27 of figure 2           │   │ sub-sequences            │
└──────────────────────────┘   └──────────────────────────┘
              ╲ 45          42 ╱        │
                                        ▼
                            ┌──────────────────────────┐
                         43 │ For each raw sub-sequence:│
                            │ Steps 221 to 224 and     │
                            │ 23 to 27 of figure 2, to │
                            │ obtain an adapted sub-   │
                            │ sequence                 │
                            └──────────────────────────┘
                                        │
                                        ▼
                            ┌──────────────────────────┐
                         44 │ Combining the adapted    │
                            │ sub-sequences            │
                            └──────────────────────────┘
```

**Figure 4**

Europäisches
Patentamt

European
Patent Office

Office européen
des brevets

**EUROPEAN SEARCH REPORT**

Application Number

EP 14 30 5152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/286302 A1 (WELKER KEN [NO] ET AL) 24 November 2011 (2011-11-24) <br> * figures 2,6,7 * <br> * table 1 * <br> * paragraphs [0126] - [0135] * <br> * paragraph [0148] * <br> * paragraphs [0153] - [0159] * <br> * paragraphs [0171] - [0173] * <br> * paragraph [0315] * | 1,18 | INV. <br> G01V1/38 <br> G01V1/00 |
| A | US 2013/286776 A1 (RENAUD D) 31 October 2013 (2013-10-31) <br> * abstract * <br> * figures 1,3-6 * <br> * claims 1,11 * | 1-18 | |
| A | US 2013/188448 A1 (SILIQI RISTO [FR] ET AL) 25 July 2013 (2013-07-25) <br> * abstract * <br> * figures 3,11 * | 1,18 | |
| A | US 6 182 014 B1 (KENYON ASTRID S [US] ET AL) 30 January 2001 (2001-01-30) <br> * the whole document * | 1,18 | TECHNICAL FIELDS SEARCHED (IPC) <br><br> G01V |
| A | US 2009/157242 A1 (HOLO ANDREAS [NO] ET AL) 18 June 2009 (2009-06-18) <br> * abstract * <br> * figures 1,4-6 * | 1,18 | |

The present search report has been drawn up for all claims

| Place of search | Date of completion of the search | Examiner |
|---|---|---|
| The Hague | 4 July 2014 | Meyer, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 ........................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 14 30 5152

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2014

| Patent document cited in search report | | Publication date | Patent family member(s) | | Publication date |
|---|---|---|---|---|---|
| US 2011286302 | A1 | 24-11-2011 | NONE | | |
| US 2013286776 | A1 | 31-10-2013 | CA | 2810810 A1 | 27-10-2013 |
| | | | CN | 103376467 A | 30-10-2013 |
| | | | EP | 2657725 A1 | 30-10-2013 |
| | | | US | 2013286776 A1 | 31-10-2013 |
| US 2013188448 | A1 | 25-07-2013 | AU | 2013200375 B2 | 22-05-2014 |
| | | | CA | 2803327 A1 | 24-07-2013 |
| | | | CN | 103226209 A | 31-07-2013 |
| | | | EP | 2620789 A2 | 31-07-2013 |
| | | | US | 2013188448 A1 | 25-07-2013 |
| US 6182014 | B1 | 30-01-2001 | NONE | | |
| US 2009157242 | A1 | 18-06-2009 | AU | 2008249165 A1 | 02-07-2009 |
| | | | EP | 2071362 A2 | 17-06-2009 |
| | | | US | 2009157242 A1 | 18-06-2009 |
| | | | US | 2012221182 A1 | 30-08-2012 |

EPO FORM P0459